# EUROPEAN PATENT SPECIFICATION

(11) **EP 0 651 962 B1**
(45) Date of publication and mention of the grant of the patent: **29.12.1997**
(21) Application number: 94500137.8
(22) Date of filing: 26.07.1994
(51) Int. Cl.: A47J 27/09, A47J 45/06, A47J 36/38

(54) **Improved lid for a controlled pressure cooker**
Verbesserter Deckel für einen kontrollierten Dampfdruckkochtopf
Couvercle amélioré pour un cuiseur à vapeur contrôlée

(30) Priority: 01.10.1993 ES 9302603
(43) Date of publication of application: 10.05.1995
(73) Proprietor: PLASTICOS DE GALICIA, S.A., 36210 Vigo (Pontevedra) (ES)
(72) Inventor: VILLAR OTERO, Domingo, E-36210 VIGO (ES)
(74) Representative: De la Fuente Fernandez, Dionisio

(56) References cited:
- EP-A- 0 111 292
- AU-B- 534 388
- BE-A- 696 049
- DE-A- 2 353 384
- DE-A- 2 440 157
- DE-A- 2 510 808
- FR-A- 1 089 118
- FR-A- 2 648 341
- GB-A- 847 791

## Description

### BACKGROUND OF THE INVENTION

The present specification refers to an Utility Model, relating to an improved lid for a controlled pressure cooker, the purpose of which is to be installed on a pot or similar also made, like the lid, of a plastic material, within which diverse ingredients are placed, in particular rice with its corresponding seasonings, after which it is introduced into a microwave oven.

### FIELD OF THE INVENTION

This invention applies to the industry devoted to the manufacture of household furniture, particularly household equipment and kitchen utensils made of a plastic material.

### RELATED ART

As is well known, there are at present a plurality of pots and similar used in kitchen for a quick cooking of a series of foodstuffs, acting as pressure cookers.

Among the different types known up till now, there are the typical pressure cookers, which after placing on them a lid, which has a rubber joint and a closing and fitting element, act. This closing element, by screwing, ties together, in a fixedly manner, the lid and the main body of the pot, then receiving a part which acts as a valve, this valve turning when the temperature in the pot reaches a fixed pressure which, consequently, causes the turning of the pressure part and emits a hissing produced by the water vapour or air expelled.

It is also known, at present, the existence of a series of conventional pots or similar which have such dimensions and thickness at their bottoms as, by placing on them a practically air-tight lid, they can cook foodstuffs without the addition of water.

Likewise, it is known the existence, at present, of a series of pans or casseroles having lids which are adjusted or joined adequately by means of appropiate clasps, and having, on the center portion of their surface, an adjustable valve, through which and after being positioned, an almost perfect cooking of the products contained is obtained; (see e.g. EP-A-0 111 292).

Nevertheless, in all cases, when cooking rice, either in a pressure cooker, or in a similar pot acting under controlled pressure, it has been checked that the emission outside of liquid carrying starch in suspension gives rise, on the upper part of the pot, exactly on the lid, to a sticky layer according to the starch characteristics, and this layer, after drying,leads to additional operations for cleaning it.

Also, all pots which are known up till now for pressure cooking are made of metal materials, so avoiding the same to be introduced in a microwave oven to cook a determined foodstuff such as the rice.

An obvious solution to the present problems on this matter - would be to rely on an adequate lid that, upon being coupled to a pot or similar having similar characteristics with same with regard to dimensions, material and shape, could obtain, owing to its features, the product incorporated inside, such as, for example, rice, in an adequate way, cooking it perfectly, and avoiding, by an appropiate adjustment of its control elements, the water carrying starch in suspension, from the rice, to come out the pot.

Nevertheless, up till now, nothing is known about the existence of a pot or similar having a lid with the features pointed out as suitable.

### SUMMARY OF THE INVENTION

The improved lid for a controlled pressure cooker as proposed by the invention as claimed constitutes per se an evident solution of the present problems in this matter, since, apart from allowing a foodstuff of difficult optimization to be perfectly cooked, it achieves that the lid, placed on a pot or similar made of the same material and exhibiting harmonic dimensions and after - being placed the whole assembly in a microwave oven, provides an adequate cooking of the foodstuff, and, at the same time, impedes the starch possibly expelled outside in suspension with water vapour to come out from the interior of the pot or similar, since the pressure constants are adequately controlled, this anomaly being obviated.

In a more definite manner, the improved lid for a controlled pressure cooker as proposed by the invention can be fixed on a pot or similar, either on its bottom or sides, by means of clasps or conventional retaining elements impeding the pot containing the foodstuff and the lid hermetically closing the pot to be taken apart due to an internal pressure possibly generated by the operation of the microwave oven.

Specifically, the lid is composed of four fittable parts o elements and perfectly detachable in order to make easy their cleaning, namely:
- a rotary knob
- a lid body
- a vapour condenser
- a counterlid.

The rotary knob is shaped as a part having perforations on portions of its upper surface and has a center tubular shaft with a small circular projection provided on its lower end, which allows it to be fastened to the lid body by a simple pressure, and then to turn the body at will in order to control or calibrate more or less the vapour exit from inside, generated by the foodstuff cooking in co-operation with its different ingredients.

The lid body is markedly domed and has a projection on its center portion, said projection to be embraced by the above-mentioned rotary knob, the lid body having holes at some portions or areas of the upper circle and having a center tubular orifice perforated the function of which is to house the tubular shaft of the knob so that by turning the latter, the exit of the water vapour generated in the cooking is calibrated.

It should be pointed out that the lid body has a recess to collect any residue possibly in suspension in the water vapour when this is expelled outside, this recess acting as receiver of possible substances and to avoid these substances to spill on the lid surface.

The vapour condenser consists of a part fitting, on the upper part, inside the lid body center projection, and on its lower part, it has a tubular body finished off by small castle elements in order to provide crevices to facilitate the vapour exit when the tubular body rests on the counterlid.

Around the perimeter of this tubular body, there is arranged a plurality of holes the function of which is to facilitate the vapour exit when the knob is in an opening position.

Lastly, the counterlid consists of a disk adjustably fitted to the lid body, having a center orifice surrounded by a tubular body having longitudinal flutes outside with a diameter and height lesser than those of the tubular body of the condenser, so that the vapour generating the cooking will rise through the tubular body and will pass between both tubular bodies, creating later expansion and cooling, with which, the substances drawn in suspension will deposit on the counterlid, passing, free of them, through the condenser and knob orifices when the position of the knob, open or close, allows it, depending on whether the orifices on the - mentioned knob coincides or not with those of the lid body.

### BRIEF DESCRIPTION OF THE DRAWINGS

In order to complement this description and aid to a better understanding of the features of the invention, the accompanying drawings, which are a part of this specification, show in an illustrative but non limitative sense, the following:

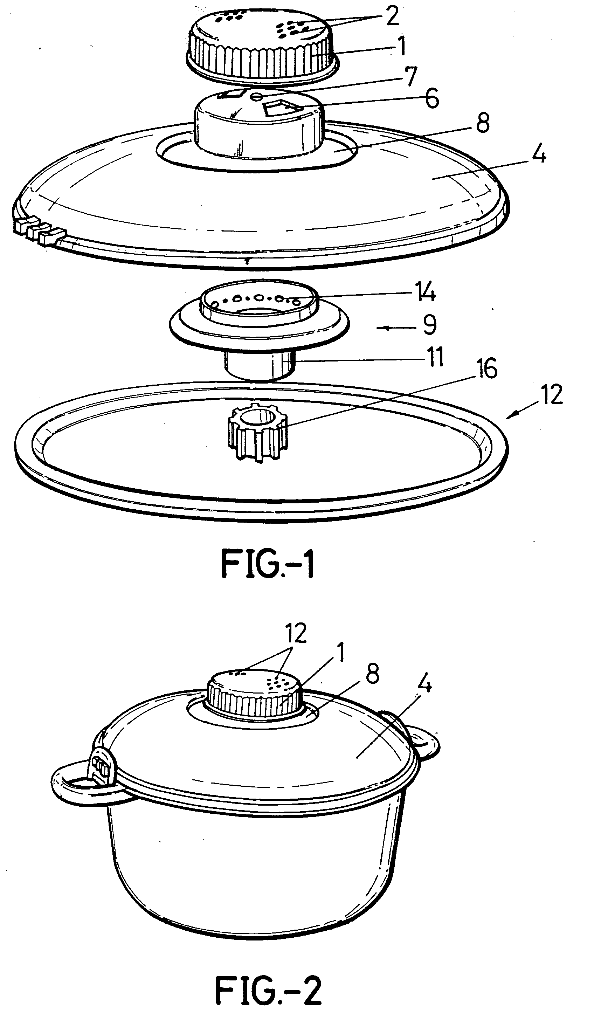

Figure 1 shows a perspective view of the rotary knob, lid body, vapour condenser and counterlid, which are the elements constituting the improved lid for a controlled pressure cooker, object of the invention, before being assembled.
Figure 2 shows a perspective view of the lid shown non-assembled in Fig. 1, adequately assembled and placed on a pot to which it is united.

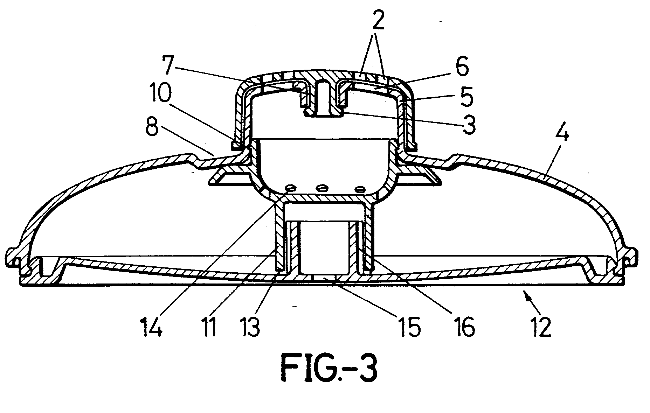

Figure 3 shows, lastly, a side elevational view, duly sectioned, of the object of the invention related to an improved lid for a controlled pressure cooker.

### DETAILED DESCRIPTION OF THE PREFERRED EMBODIMENT

From these figures, it can be seen that the improved lid for a controlled pressure cooker is constituted starting from a rotary knob (1), having a plurality of perforations (2) on some portions of its upper surface and having a center tubular shaft (3) which has a small circular projection on its lower end allowing it to be affixed to the lid body (4) by means of a simple pressure, and turning it at will to allow a larger or smaller vapour exit.

The shape of the lid body (4) is markedly domed and has a center projection (5) to be surrounded by the knob (1), having holes (6) on some portions of the upper circle, and a center tubular orifice (7) constituting a housing for the tubular shaft (3) of the knob (1), so that upon turning the knob (1) the exit of the vapour generated during the cooking can be adequately calibrated.

The lid body (4) has a recess (8) for collecting any residue in suspension which could come out carried by the vapour.

The lid has a third part constituted as a vapour condenser (9), consisting of a part insertable, at its upper part, inside the center projection (5) of the lid body (4), and at its lower part, it has a tubular body finished off by small castle protuberances (11) which when resting on the counterlid (12) create longitudinal flutes (13) for the vapour exit.

Around this tubular body, finished off by small castle protuberances (11), there is arranged an indeterminate number of orifices or perforations (14) allowing the vapor to come out when the knob is in an open position.

Lastly, the improved lid for a controlled pressure cooker has a counterlid (12) consisting of an adjustable disk fitted to the lid body (4), with a center orifice (15) surrounded by a tubular body with longitudinal flutes (16) outside, which have a diameter and a height lesser than those of the condenser tubular body, so that the vapour generating the cooking will rise inside it and pass between both tubular bodies, creating then expansion and cooling, with which the substances carried by it in suspension will be deposited on the counterlid, and then passing, free of them, through the condenser and knob orifices when the position of the latter, open or close, allows for it, and depending on whether the knob orifices coincide or not with those of the lid body.

It is not considered necessary to extend more this description for an expert in the art to understand the scope of the invention and the advantages derived from it.

The materials, shape, size and arrangement of the components are open to variation, provided that it does not imply any alteration to the essence of the invention.

The terms under which this specification has been described should be always taken in an ample and not limitative sense.

## Claims

1. An improved lid for a controlled pressure cooker to be installed on an internal upper edge of a cooking pot preferably made of a plastic material and having, on two side portions, a flange to be joined to fastening elements located on the pot, characterized in that it is constituted starting from a rotary knob (1) having perforations (2) on some portions of its upper surface, and having a center tubular shaft (3) with a small circular projection on its lower end, so allowing it to be fastened to the body (4) of the pressure lid, and to be turned at will to calibrate the vapour exit, being located on the lid body, below which there is placed a vapour condenser (9), this assembly being closed by a counterlid (12).

2. An improved lid for a controlled pressure cooker, according to claim 1, characterized in that the lid body has a markedly domed structure and has a center projection (5) received and supported by the knob, presenting holes (6) on some portions of the upper circle surface and fitted with a center tubular orifice (7) for housing the knob tubular shaft (3), allowing it to turn, so calibrating the vapour exit generated in the cooking, and the lid body having a recess (8) surrounding the center projection (5).

3. An improved lid for a controlled pressure cooker, according to the preceding claims, characterized in that the vapour condenser is shaped as a part insertable, at its upper side (10), in the center projection (5) of the lid body (4), and having, on its lower side, a tubular body finished off by small castle protuberances (11) resting on the counterlid, so forming a plurality of crevices (13) for the exit of vapour, and around the tubular body at the upper side of the condenser (9), there is arranged a plurality of perforations (14) allowing for the vapour exit when the knob is in an opening position.

4. An improved lid for a controlled pressure cooker, according to the preceding claims, characterized in that the counterlid is shaped as a disk which is adjustably fitted to the lid body, having a center orifice (15), the perimeter of which is surrounded by a tubular body, longitudinal flutes (16) on its external portion with a diameter and height which are lesser than those of the condenser tubular body, among which tubular bodies the vapour passes when rising inside.

5. An improved lid for a controlled pressure cooker, according to the preceding claims, characterized in that the vapour passing inside the bodies acting as expanding and cooling elements, impedes the exit of substances outside, which are deposited on the counterlid, and leaving free passage to the vapour passing through the condenser and knob orifices when the positioning of the latter allows for it and depending on whether the knob orifices (2) are or are not coincident with those (6) of the lid body (4).

## Patentansprüche

1. Ein für einen kontrollierten Dampfdruckkochtopf angepaßter Deckel, der dazu bestimmt ist, sich in den inneren oberen Rand eines vorzugsweise aus einem plastischen Material hergestellten Kochbehälters einzugliedern, und der in zwei seitlichen Bereichen über einen Vorstoß zur Verbindung mit den Befestigungspunkten des Behälters verfügt, dadurch gekennzeichnet, daß er von einem Drehknopf (1) ausgehend gestaltet ist, der in einigen Sektoren seiner oberen Oberfläche mit Perforationen (2) ausgestattet ist, und dadurch, daß er eine rohrförmige Mittelachse (3) besitzt, die an ihrem unteren Ende einen kleinen Vorsprung aufweist, der seine Befestigung am Körper (4) des Druckdeckels sowie seine Drehung nach Belieben zum allmählichen Ablassen des Dampfes erlaubt, wobei er auf dem Körper des Deckels angebracht ist, unter welchem sich ein Dampfkondensator (9) befindet, wobei die Gesamtheit des Deckels durch einen Gegendeckel (2) geschlossen wird.

2. Ein für einen kontrollierten Dampfdruckkochtopf angepaßter Deckel gemäß des ersten Anspruchs, dadurch gekennzeichnet, daß der Körper des Deckels von einer leicht gewölbten Struktur ist und über eine mittlere Ausbuchtung (5) verfügt, die vom Drehknopf aufgenommen und festgehalten wird, die Fenster (6) in einigen Sektoren der Oberfläche des oberen Kreises aufweist und die mit einer rohrförmigen Öffnung (7) versehen ist, die zur Aufnahme der rohrförmigen Achse (3) des Drehknopfes bestimmt ist, wobei sie seine Drehung erlaubt, womit der Austritt des Dampfes, der beim Kochvorgang entsteht, reguliert werden kann, und wobei der Körper des Deckels über eine Vertiefung (8) verfügt, die die mittlere Ausbuchtung (5) umgibt.

3. Ein für einen kontrollierten Dampfdruckkochtopf angepaßter Deckel gemäß der vorherigen Ansprüche, dadurch gekennzeichnet, daß der Dampfkondensator aus einem Stück besteht, das mit seinem oberen Teil (10) in die mittlere Ausbuchtung (5) des Körpers des Deckels paßt, und das an seinem unteren Teil einen rohrförmigen Körper besitzt, der in Kerben (11) endet, die eine Viel zahl von Rillen (13) für den Austritt des Dampfes bilden und dadurch, daß den rohrförmigen Körper umgebend an der Oberseite des Kondensators (9) eine Vielzahl von Perforationen (14) angebracht werden, die den Austritt des Dampfes erlauben, wenn sich der Drehknopf in geöffneter Stellung befindet.

4. Ein für einen kontrollierten Dampfdruckkochtopf angepaßter Deckel gemäß der vorherigen Ansprüche, dadurch gekennzeichnet, daß der Gegendeckel gestaltet ist wie eine einstellbare Scheibe und sich dem Körper des Deckels anpaßt, ausgestattet mit einer mittleren Öffnung (15), die in ihrem Umfang von einem rohrförmigen Körper umgeben wird, mit Längsrillen (16) auf der Außenseite seines Umfangs und von geringerer Höhe als der rohrförmige Körper des Kondensators, zwischen deren rohrförmigen Körpern der Dampf beim Aufsteigen durch sein Inneres passiert.

5. Für einen kontrollierten Dampfdruckkochtopf angepaßter Deckel gemäß der vorherigen Ansprüche, dadurch gekennzeichnet, daß sich der Dampf, der durch das Innere der Körper, die als Ausdehnungs- und Abkühlungselemente fungieren und den Austritt von Substanzen nach außen hin verhindern, auf dem Gegendeckel niederschlägt, und daß die Körper den Dampf durchlassen, der durch die Öffnungen des Kondensators und des Drehknopfes passiert, wenn dies, abhängig von ihrer Position in Übereinstimmung oder nicht der Öffnungen (2) des Drehknopfes mit denen (6) des Körpers (4), erlaubt wird.

## Revendications

1. Couvercle perfectionné pour autocuiseur à pression contrôlée, du type propre à s'incorporer sur le rebord supérieur interne d'un récipient de cuisson fabriqué, de préférence, en une matière plastique et disposant dans deux zones latérales d'une agrafe pour son union aux liens de fixation provenant du récipient, caractérisé en ce qu'il est constitué à partir d'un pommeau (1) giratoire, pourvu de perforations (2) dans quelques secteurs de sa surface supérieure et en ce qu'il a un axe (3) tubulaire central avec un faible épaulement circulaire situé à son extrémité inférieure, en permetttant sa fixation au corps (4) du couvercle sous pression et sa rotation à volonté pour autoriser la sortie graduelle de la vapeure, se situant sur le corps du couvercle, en dessous duquel se trouve ajusté un condenseur (9) de vapeur, l'ensemble du couvercle étant fermé par un contre-couvercle (2).

2. Couvercle perfectionné pour autocuiseur à pression contrôlée, selon la première revendication, caractérisé en ce que le corps du couvercle possède une structure sensiblement bombée et dispose d'un épaulement (5) central qui est reçu et maintenu par le pommeau, en présentant des fenêtres (6) dans quelques secteurs de la surface du cercle supérieur et qui se trouve pourvu d'un orifice (7) tubulaire central destiné au logement de l'axe (3) tubulaire du pommeau, en permettant sa rotation, la sortie de la vapeur générée lors de la cuisson pouvant être graduée et le corps du couvercle disposant d'une dépression (8) qui entoure l'épaulement (5) central.

3. Couvercle perfectionné pour autocuiseur à pression contrôlée, selon les revendications antérieures, caracterisé en ce que le condenseur de vapeur est configuré comme une pièce qui s'encastre par sa partie (10) supérieure à l'intérieur de l'épaulement (5) central du corps du couvercle et qui a à sa partie inférieure un corps tubulaire coiffé en forme de petits créneaux (11) s'appuyant sur le contre-couvercle et formant une pluralité de fentes (13) de sortie de vapeur et entourant le corps tubulaire par la partie supérieure du condenseur (9), on a disposé une pluralité de perforations (14) qui permettent la sortie de la vapeur lorsque le pommeau se trouve en position d'ouverture.

4. Couvercle perfectionné pour autocuiseur à pression contrôlée, selon les revendications antérieures, caractérisé en ce que le contre-couvercle est configuré sous forme de disque ajustable et qui épouse le corps du couvercle pourvu d'un orifice (15) central entouré périmétralement d'un corps tubulaire, de stries (16) longitudinales dans sa zone externe de diamètre et hauteur inférieur à celles du corps tubulaires du condenseur, la vapeur passant entre ses corps tubulaires en ascendant à travers son intérieur.

5. Couvercle perfectionné pour autocuiseur à pressión contrôlée, selon les revendications antérieures, caractérisé en ce que la vapeur passant par l'intérieur des corps agissant comme des éléments de détente et de refroidissement, évite la sortie de substances à l'extérieur en se déposant sur le contre-couvercle et en laissant que la vapeur passe librement à travers l'orifice du condenseur et du pommeau lorsque celui-ci le permet, en fonction de positionnement en coïncidence ou non des orifices (2) du pommeau avec ceux (6) du corps (4) du couvercle.
